# EUROPEAN PATENT APPLICATION

(11) **EP 3 876 095 A1**
(43) Date of publication of application: **08.09.2021**
(21) Application number: 20213805.3
(22) Date of filing: 14.12.2020
(51) Int. Cl.: G06F 9/44, G06F 9/455

(54) **FRAMEWORK-AGNOSTIC AGILE CONTAINER LAUNCHES THROUGH LATERAL REUSE OF CAPABILITIES IN STANDARD RUNTIMES**

(30) Priority: 04.03.2020 US 202062984829 P; 24.07.2020 US 202016938070
(71) Applicant: Intel Corporation, Santa Clara, CA 95054 (US)
(72) Inventor: MOHAN, Anup, Milpitas, CA California 95035 (US); SANE, Harshad, Portland, OR Oregon 97229 (US); EDUPUGANTI, Saikrishna, Hillsboro, OR Oregon 97124 (US); RAUT, Nimisha, Santa Clara, CA California 95054 (US); DOSHI, Kshitij A., Tempe, AZ Arizona 85282 (US); KAMATGI, Karan, Santa Clara, CA California 95054 (US)
(74) Representative: 2SPL Patentanwälte PartG mbB

(57) **Abstract**

Systems, apparatuses and methods may provide for technology that creates one or more capabilities of a software container prior to issuance of a request to create the container, wherein the one or more capabilities are associated with a computational overhead that exceeds a first threshold and a memory overhead that does not exceed a second threshold, intercepts the request to create the software container after creation of the one or more capabilities, and associates the one or more capabilities with the software container.

## Description

### CROSS-REFERENCE TO RELATED APPLICATIONS

The present application claims the benefit of priority to U.S. Provisional Patent Application No. 62/984,829 filed on March 4, 2020.

### TECHNICAL FIELD

Embodiments generally relate to computing systems. More particularly, embodiments relate to computing systems that enable framework-agnostic agile container launches through lateral reuse of capabilities in standard runtimes.

### BACKGROUND

Container models are gaining fast adoption across the cloud ecosystem, and may be foundational for platform independent, resource efficient, and highly scalable rapid application deployments. Further, technology and business needs may be making containers the predominant means for "on demand" deployment of applications, especially in newer, fast growing business models that rely on highly dynamic and lightweight orchestration. Containers have become an increasingly popular alternative to using virtual hardware machines (VMs) because of the ability to achieve denser and more responsive and on-demand execution of applications, microservices, and for Function-as-a-Service (FaaS) for event-triggered, small, run-to-completion units of on-demand-computation.

### BRIEF DESCRIPTION OF THE DRAWINGS

The various advantages of the embodiments will become apparent to one skilled in the art by reading the following specification and appended claims, and by referencing the following drawings, in which:
FIG. 1 is a block diagram of an example of a conventional container management architecture;
FIG. 2 is a flowchart of an example of a method of managing container capabilities according to an embodiment;
FIG. 3 is a block diagram of an example of a container management architecture according to an embodiment;
FIG. 4 is a block diagram of an example of a lateral capability reuse according to an embodiment;
FIG. 5 is a block diagram of an example of a software stack according to an embodiment;
FIG. 6 is a flowchart of an example of a network namespace creation according to an embodiment;
FIG. 7 is a block diagram of an example of a capability manager according to an embodiment;
FIGs. 8A and 8B are flowcharts of examples of methods of operating a performance-enhanced computing system according to an embodiment;
FIG. 9 is a set of comparative charts of an example of conventional results and results according to an embodiment;
FIG. 10 is a block diagram of an example of a data structure according to an embodiment;
FIG. 11 is a block diagram of an example of a cross-framework lateral reuse according to an embodiment;
FIG. 12 is a block diagram of an example of a recursive or iterative application of a translation and reuse solution according to an embodiment;
FIG. 13 is a block diagram of an example of a performance-enhanced computing system according to an embodiment;
FIG. 14 is an illustration of an example of a semiconductor apparatus according to an embodiment;
FIG. 15 is a block diagram of an example of a processor according to an embodiment; and
FIG. 16 is a block diagram of an example of a multi-processor based computing system according to an embodiment.

### DESCRIPTION OF EMBODIMENTS

Container cold start performance bottlenecks is an important issue faced by cloud service providers. Concurrent container startups may be unavoidable especially in the FaaS model. Studies have shown that the cold start latencies are worsened under concurrency.

Some workarounds may have been employed either by cloud service providers or by developers to overcome the cold start issues. These are: Pre-warm containers - Generic pre-initialized containers started with a specific runtime such that any actions for same runtime and dependency can get going quickly; Warm containers - Previously used containers for an action that are saved and kept runnable in memory, so that a successive instance of same action can use them - saving both the time to start a new container and the time to pull in the code to be executed; Periodically warm containers - Developers frequently use this technique as a hack - keeping a container warm by artificially asking it to do dummy work.

A pre-warm container, being environment specific, cannot be broadly reused. It is thus difficult to justify wasting large amounts of memory keeping it around. If only a small number are kept around, however, then a sudden spike in the demand forces cold starts anyway. A warm container consumes more memory/storage and may be problematic unless a particular activity is expected to arise sufficiently frequently. Periodically warm containers have the same disadvantages as warm containers.

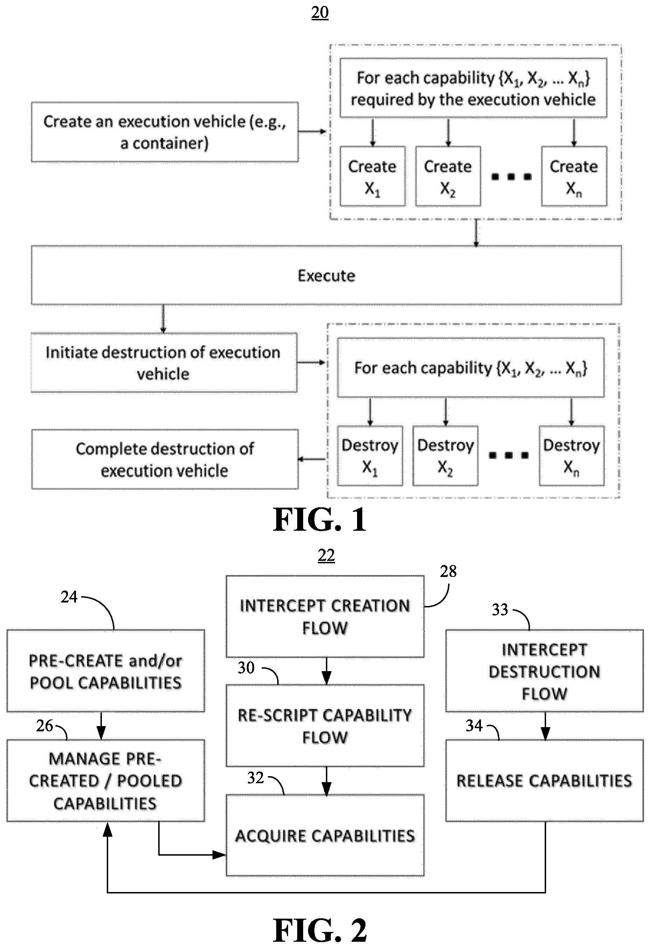

What may happen conventionally is shown in an architecture 20 of FIG. 1. When a container needs to start, it creates each of a number of capabilities it needs (X₁...Xₙ). Once the container is built, the program executes inside the container, and then when the program finishes, the container starts to be dismantled. All of the created capabilities are now destroyed, and then the container is destroyed. This flow is expensive if, say some of the capabilities such as X_{K+1}, ... Xₙ are computationally expensive to create, even if they do not require much by way of memory capacity.

Some capabilities, such as the network namespace of a container are computationally expensive, but not memory capacity intensive. In an embodiment as depicted in a process flow 22 of FIG. 2, these computationally expensive but not memory capacity intensive capabilities are pre-created 24 in a shell container, and managed 26 by capability specific managers. Container creation flow is intercepted 28 at the port address for the creation service at the lowest level in the orchestration/provisioning flow. Container configuration is re-scripted 30 at this juncture and given to a standard creation engine. The re-scripted configuration causes the engine (e.g., the Docker engine, CRI/container runtime interface) to acquire 32 the pre-created capabilities (instead of creating the capabilities on demand) by attaching to the shell container. The re-scripting engine (e.g., translator) is cloud/container framework agnostic and is compatible with de-facto standards - "containerd" and "rune" as the rescripting engine capitalizes on the build-as-directed paradigm that is the basis of these de-facto standard engines (containerd, rune, etc.)

Upon finishing a program that run inside the created container, that is, at the time of exit 33, each capability acquired 32 is released 34 from the container to the capability manager, which may recycle the acquired capability thus released, reinitialize it, or manage its lifecycle in some other way, according to a programmable policy. Results are provided herein showing that when applied in network namespace creation, the technology described herein achieves nearly 25X improvement in speed of container startups, and, makes them predictably low latency; while also demonstrating that it integrates seamlessly into standard container runtime environments and works across different orchestration stacks. As with network namespace, other capabilities may be similarly managed: for example, a shell container may be customized or optimized for the hardware (HW) and/or platform features of the host processor (e.g., central processing unit/CPU), without complicating higher layers in application software. Such an approach may benefit from the customizations transparently.

FIG. 2 demonstrates that instead of creating every capability on demand, computationally expensive capabilities may be pre-created and supplied into container creation flow. To accomplish this, the technology intercepts the creation flow, and re-scripts its capability creation so that the pre-created capabilities may be acquired instead of being created on demand. Similarly, upon container destruction, the destruction flow is intercepted to handle these capabilities; if appropriate, such capabilities may be pooled and reinitialized as needed, for future reuse.

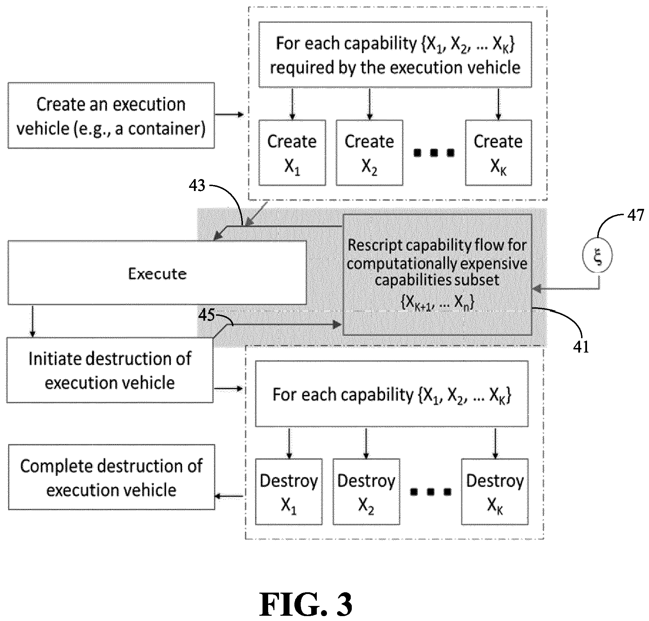

Turning now to FIG. 3, instead of caching all resources, which can be relatively expensive in terms of memory and/or storage, the technology described herein includes an architecture 40 that retailors the container creation by re-scripting its configuration at creation time. Some capabilities may not be poolable (e.g., for security reasons). For such capabilities, this approach reduces latency and lock contention under demand spikes by pre-creating ahead of time. Indeed, for one of the most expensive capabilities - namely a container's network setup - security can be handled while reusing the network namespace but making the correspondence between successive users, containers, or, usages of containers impossible to predict, and by mixing in random creation and destruction of pooled namespaces.

Thus, FIG. 3 illustrates an example in which the subset of capabilities X_{K+1} ... Xₙ out of the original set {X₁, ... Xₙ} are known to be expensive to create, but not expensive to keep around in memory. These capabilities are rescripted 41 based on policy and configuration automation support 47 (e.g., policy data), supplied 43 and returned 45 through a "lateral" arrangement.

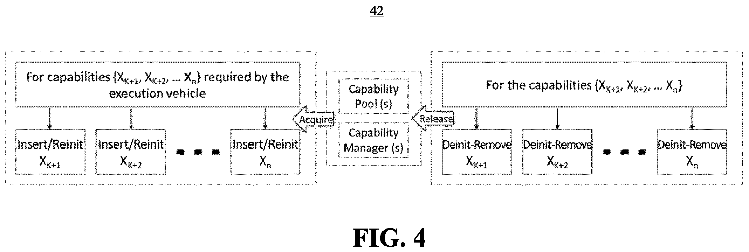

FIG. 4 shows the lateral arrangement 42 in more detail. More particularly, an acquire-release behavior is shown. On the left is the creation flow, and on the right the destruction flow of a container.

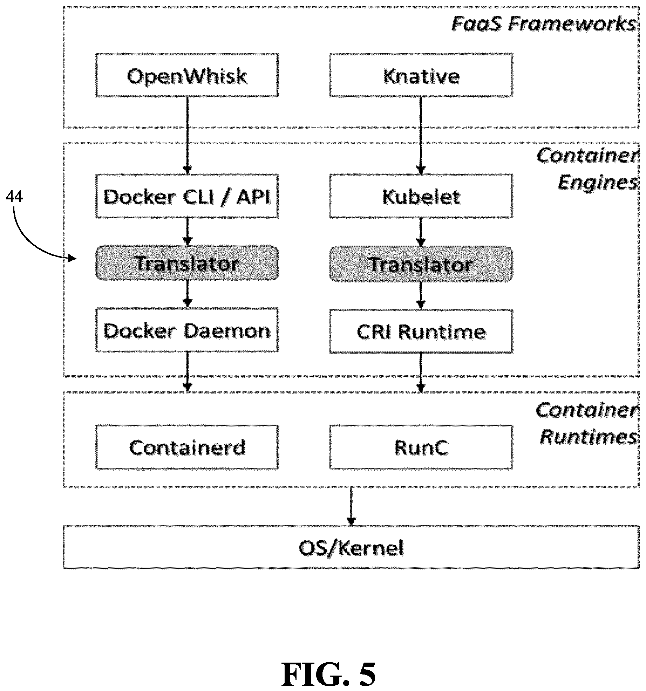

FIG. 5 shows the insertion of a translator 44 into a hierarchy of an orchestration stack by using a bootstrapping module. Here, the high level architecture into which these components fit is explained. Container runtime modules (Containerd, RunC) are the lowest level, highly modular and extensible assemblies of standard and pluggable modules for creating, destroying and facilitating the running of containers. They are the common infrastructure across multiple cloud container and FaaS frameworks (only two are shown for simplicity). Rune, an OCI (open container initiative) reference implementation, executes containers. Containerd takes care of (1) image push and pull (2) managing storage (3) executing containers by calling Rune with the right parameters, (4) managing network primitives for interface, (5) managing network name spaces, joining existing namespaces, etc. Containerd leverages the OCI (open container initiative) runtime spec, image format spec, and of course, rune. Because of its massive adoption, containerd is the industry standard for implementing OCI.

As FIG. 5 shows, an enhancement resides at the Container Engine level and is completely agnostic to the FaaS architecture/framework and the container engine itself. By introducing the enhancement as a translator 44, the required changes are kept to a minimum (e.g., preventing disturbances to other users of the common runtime layer). The solution, however, still generalizes across frameworks. Similarly, a translator 44 approach does not create future portability and/or backward compatibility challenges since the translation does not create a separate way of entering the common low-level portions; nor does it require a separate engine for the lateral insertion and recapture of capabilities. The translator 44 requires only minimal changes in order to be adapted to different hierarchies and therefore completely relieves any need for of removing the concurrent container startup bottleneck from the FaaS frameworks.

The translator 44 may thus be used for other purposes in the future. It may serve as a hook point for embedding other pre-created capabilities - hardware or software - into a shell container that it passes on to the Docker engine or the CRI. The translator 44 may be used, for example, to attach (e.g., in a framework-transparent way) resource attestations or security credentials on behalf of a principal at whose behest the container creation is being performed - instead of the attachment being done differently for each different framework at the top level.

The use of a translator 44 to maintain transparency on the lateral caching of expensive-to-create resources is an advantageous aspect of the technology described herein. The translator 44 serves the dual purpose of (1) keeping the actual execution environment (e.g., the runtime components layer) oblivious of such recycling and (2) customizing the pre-creating, pooling, initializing, de-initializing, recycling, and decommissioning of a plurality of capabilities in a modular, automatable, and policy-controlled manner. Although, in this disclosure the use of the translator 44 may be described for caching and recycling network namespaces, the concept and the architecture permit amortizing the cost of any capability creation over many instances of reuse. As an example, in a service mesh architecture using an ENVOY proxy, one can also pre-perform the mTLS (mutual Transport Layer Security) connection between a shell container and a local services peer, to protect against possible MITM (man-in-the-middle) threats on a multi-tenant platform. Such an approach effectively allows easy recycling of an encrypted channel for host local accesses, and merely calls for a symmetric key or shared secret to be reinitialized (again, only if so needed) when attaching to a different container or attaching to a different container under a different security principal - while bypassing the computationally expensive, mutual-authentication between long-lived entities.

Similarly, for containers that are launched and reclaimed on the same host, various host specific hardware specializations may be performed during pre-creation time and reused: for example, all such shell containers may share a common library map that contains, for example, library code for an Intel QAT (QuickAssist Technology) or an Intel Analytics Accelerator implementation that does not have to be individually performed from an application level engine (thus applications can remain agnostic of such hardware specializations on the host and still benefit transparently from them).

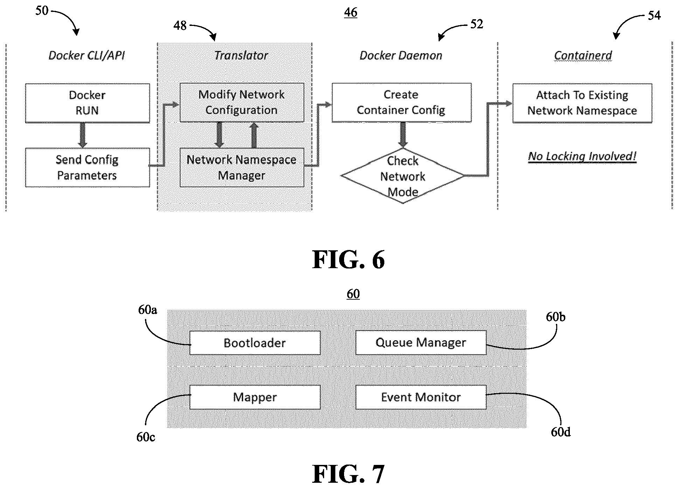

FIG. 6 shows a method 46 that describes details specifically for the networking capability that is provisioned into each container, independent of the containerization and invocation framework. The details may vary according to other capabilities, but that may only mean that capabilities being laterally recycled are different, within the same overall scripting flow - this aspect will become clearer from an illustration of what happens for the network namespaces.

In the illustrated example, a translator 48 is inserted between the Docker client 50 and the daemon 52 to intercept communication between them. The Docker client 50 sends configuration parameters to the daemon 52 - but now it is the translator 48 that receives the parameters, and the translator 48 interprets them according to the capability to be recycled. For the network namespace capability, the translator 48 identifies a pre-created namespace, for example, " 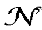 " where 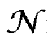 meets requirements such as security, subdomain, host bridge, etc.

The translator 48 next synthesizes a new configuration and sends the new configuration to the daemon 52: for this case, the translator 48 modifies the network mode parameter to be attached to 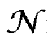 (e.g., if Nis non-null). If 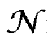 is null, the translator 48 may retain the original direction, requesting (creation of) a new network namespace.

Docker has built-in support for such attachments and the on-the-fly interception and translation approach of this technology diverts previously scripted provisioning flow into bridging to this built-in capability. As shown in FIG. 6, the daemon 52 creates the final configuration and instructs *containerd* 54 (note *containerd* does the actual work in this case) to use the pre-created capability (network namespace) for the container.

The daemon 52 will now create the final configuration and instruct containerd 54 to use the pre-created network namespace for the container. The twist in this solution that is also advantageous is that the socket (e.g., network socket) on which the Docker daemon 52 generally listens, is changed to match the output socket of the translator 48. Note that no changes are required in Docker or a framework that sits above Docker.

FIG. 7 shows the architecture of a capability manager 60 (60a-60d, e.g., including logic instructions, configurable logic, fixed-functionality hardware logic, etc., or any combination thereof). In the case of this example, the capability that is being managed is the network namespace. Therefore, a lifecycle management for the network namespace according to the principles of embodiments will be described shortly. Other lower level capabilities different from network namespaces may have different lifecycle management steps, and so there may be appropriately different methods of attaching/detaching (in place of creating/destroying) that would apply.

The architecture is shown for a network namespace manager. For example, a bootloader module 60a has the function of establishing communication with the translator module and for pre-creating network namespaces; these pre-created network namespaces may be in the form of shell containers that have a network connection with a bridge, but do not have anything else in them. A thread-safe queue manager 60b holds unassigned network namespaces, and hands them out to the translator when the translator requests an unassigned namespace. A mapper module 60c maintains information about which in-use container has been assigned which network namespace, so that at container expiration time (i.e., when the container is being exited), the network namespace can be re-harvested. An event monitor module 60d tracks container expirations, extracts the identifier of each expiring container, maps (e.g., using the mapper) the identifier of the expiring container to a network namespace, and gives the network namespace to the queue manager for reclaiming and preparing for re-assignment to a future request from the translator.

Management of other capabilities would follow roughly similar roles and flow: something bootstraps the capability manager 60 into an orchestration flow, something keeps track of available capabilities, something keeps track of the association between containers and the assigned capabilities, and something to keep track of which assignees are expiring so that the capability can be harvested.

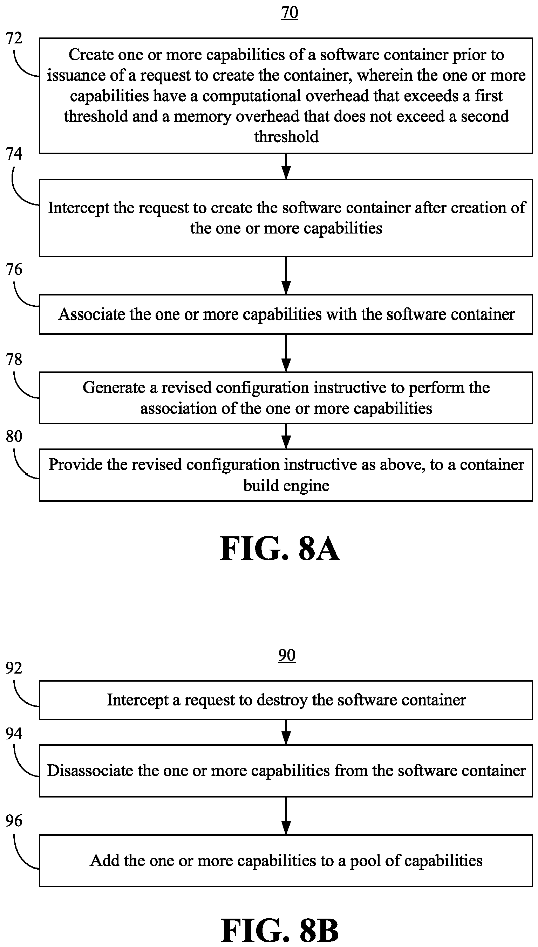

FIG. 8A shows a method 70 of operating a performance-enhanced computing system. The method 70 may be implemented in one or more modules as a set of logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality logic hardware using circuit technology such as, for example, application specific integrated circuit (ASIC), complementary metal oxide semiconductor (CMOS) or transistor-transistor logic (TTL) technology, or any combination thereof.

For example, computer program code to carry out operations shown in the method 70 may be written in any combination of one or more programming languages, including an object oriented programming language such as JAVA, SMALLTALK, C++ or the like and conventional procedural programming languages, such as the "C" programming language or similar programming languages. Additionally, logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

Illustrated processing block 72 provides for creating one or more capabilities of a software container prior to issuance of a request (e.g., an on-demand request) to create the container, wherein the one or more capabilities are associated with a computational overhead that exceeds a first threshold (e.g., computational threshold measured in time, cycles, processor utilization percentage, etc., or any combination thereof) and a memory overhead that does not exceed a second threshold (e.g., memory threshold measured in bytes, pages, cache lines, etc., or any combination thereof). In an embodiment, the capabilities are automatically pre-created based on policy data. The capabilities may be hierarchical in nature (e.g., with the creation/destruction of low level capabilities also creating/destroying higher level capabilities in the hierarchy). Block 74 may intercept the request to create the software container after creation of the one or more capabilities. Additionally, block 76 associates the one or more capabilities with the software container.

In one example, the process of creating capabilities (e.g., block 72) includes adding the one or more capabilities to a pool of capabilities prior to issuance of the request to create the software container. Similarly, the process of associating capabilities with software containers (e.g., block 76) may include removing the one or more capabilities from the pool. Illustrated processing block 78 also provides for generating a revised configuration instructive to perform the association of the one or more capabilities, where block 80 provides the revised configuration instructive as above, to a container build engine. The illustrated method 70 therefore enhances performance at least to the extent that container startups occur faster.

FIG. 8B shows another method 90 of operating a performance-enhanced computing system. The method 90 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated processing block 92 provides for intercepting a request (e.g., an on-demand request) to destroy a software container, where block 94 disassociates one or more capabilities from the software container. Additionally, block 96 may add the one or more capabilities to a pool of capabilities. The illustrated method 90 therefore further enhances performance at least to the extent that the pool of capabilities reduces the frequency of capability creation.

In an embodiment, the returned capability may be destroyed or decommissioned (e.g., instead of being added to a pool of capabilities), if so determined by a policy. Thus, two different benefits that may or may not be combined: one benefit is to pre-create a capability that is computationally expensive to create, so that latency is reduced and performance is improved; the other benefit is to recycle the capability between a previous use and a next use, to save on the overhead. In many cases, both benefits will be achieved, but in some (rare) cases, the second benefit might not be achieved either because improving security is an objective, or the nature of the capability is such that pooling the capability is not straight-forward (e.g., some timeout value is associated with the capability).

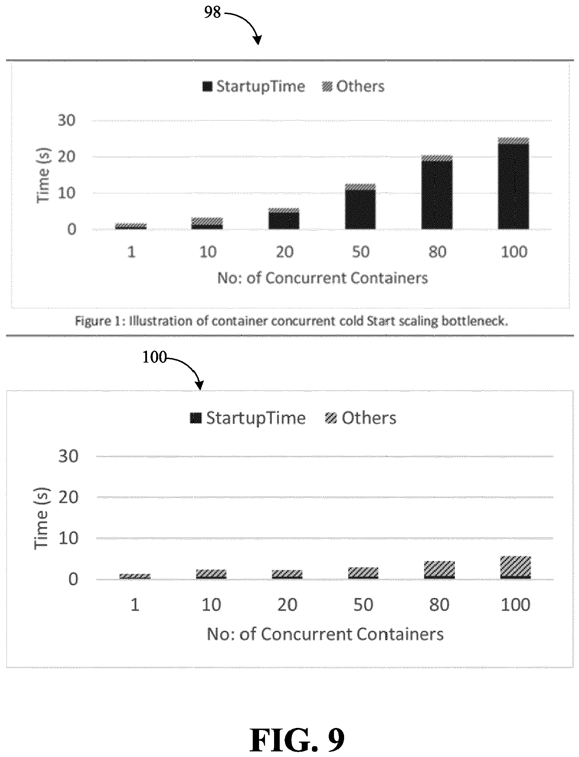

FIG. 9 shows a top chart 98 (e.g., conventional result, baseline) in which a concurrent cold start performance bottleneck is experienced using Docker containers on an INTEL XEON Platinum 8268 CPU server. By contrast, the bottom chart 100 shows the performance of concurrent container creation after applying the technology described herein. In comparison with the baseline, container startup time is reduced by up to 25X (i.e., a 96% drop from the baseline) - by bypassing the computationally expensive step (which in this case, is the setting up of network namespace for the container).

The solution is generalizable to other types of computationally expensive steps that are not memory or storage intensive - for example, establishing attestation credentials, encryption key material, obtaining holds on shared data and metadata stores, and so on. Thus, the overall approach of creating lateral recycling mechanisms and integrating them at the right layers in the containerization stack is extremely powerful and yet lightweight with respect to application re-engineering requirements (because this principle of the technology applies not to application architectures or to orchestration frameworks for applications, but to the creation and exit flows of their execution vehicle architectures).

Indeed, open source code refactoring initiatives (e.g., Mobyproject, mobyproject.org) may not provide a programmatic way to customize containers with pre-created capabilities in them, so this technology achieves an improved result by interposing and altering the direction from "create something" to "attach-to-something-that-is-pre-created". The technology immediately benefits both the developer as well as the cloud service provider in the following ways. For the cloud service provider, the technology reduces resource idling (primarily memory and storage) from warm/pre-warmed containers and the relatively large amount of penalty in cold-starts when burst mode request arrivals exceed warm/pre-warmed capacity. For the developer, the technology delivers better performance at scale, and makes more deterministic response times possible.

The benefits, however, go beyond performance. For example, the technology simplifies the process of introducing new optimizations into container modules, so that manufacturers may deliver new optimizations (e.g., pre-crafted telemetry libraries etc.), by prebuilding the optimizations and then "bolting" the optimizations on by instructing low level software to attach to what has been prebuilt. The technology therefore generalizes the KUBERNETES concept ("K8s", e.g., container orchestration) of pause containers to beneficially pre-create, pool, and reuse multiple varieties of software or hardware infrastructure, and further, to do so in a transparent and frictionless manner across different frameworks (not just K8s).

Major advantages of the proposed solution are: it is completely agnostic to the FaaS framework and the container engine and requires no code changes in the FaaS framework and container engines; it can be easily adopted to multiple FaaS frameworks and container engines; and it provides significant performance and predictability benefits (e.g., eliminating most of the startup delay) for container-based execution of just-in-time computational operations.

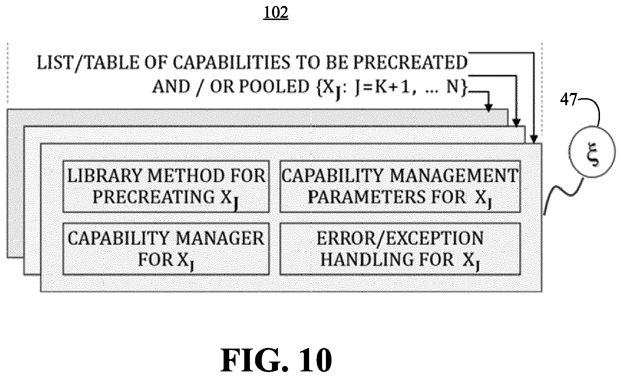

Turning now to FIG. 10, policy and configuration automation support 102 is described. Another problem solved by the technology described herein is support for policy and configuration, in a manner that permits developers and solution deployers to apply the lateral reuse method in an extensible manner without having to re-engineer orchestration stacks. As discussed below, the interception and redirection of creation and exit paths is kept transparent to existing orchestration frameworks. In addition, reuse of each of the capabilities X_{K+1} ... X_{N} need not require rewriting the translator each time as described next.

FIG. 10 shows a policy and configuration store, along with logic and data elements that are identified as policy and configuration automation support 47 (**ξ,** e.g., policy data). For each X_{J}, a configuration and policy entry may be created ahead of time into **ξ,** to identify (1) the method for pre-creating X_{J}, (2) the capability manager that exercises that library method, (3) various parameters that govern the capability management (e.g., how may copies to pre-create, maximum duration or reuse cycles for that capability before it may be pre-created afresh, etc.), and (4) what error/exception handling method to call should there be some problem with pre-creating, initializing, or de-initializing that capability. Thus, instead of reaching each system individually, policy and configuration may be software defined and thus made automated and effective through restful APIs (application programming interfaces) for the orchestration stack.

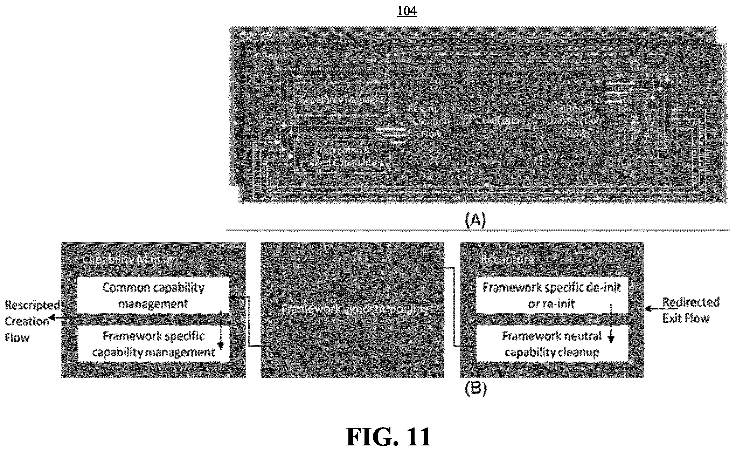

FIG. 11 shows a cross-framework lateral reuse 104 example in two parts. The description up to now refers to part A of FIG. 11, in which if there are multiple frameworks, then the lateral reuse invention applies to each framework separately. This need not be the case, as illustrated next in part B of FIG. 11 at the bottom. In the bottom part (B), capabilities may be pooled and reused across frameworks. To do so, the capability manager function divides into two parts: a common part across frameworks, and a part that is framework specific. Similarly, as shown in the righthand side of part B, any applicable deinitialization of recaptured capabilities (upon container's exit) is performed in two stages: a framework specific stage; and then a framework neutral stage. Once appropriately cleaned up, capabilities may be pooled and reused across frameworks. Note however, that such cross-framework use is possible but not always practically viable: for example, if a capability consists of a shared secret between a capability, the first threshold is a computational threshold, the second threshold is a memory threshold and a framework specific entity, then de-initialization for reusing that secret may also break that shared secret, which means that most of the work to be saved may still need to be performed when a new secret needs to be reestablished. Accordingly, while this benefit is available, the mileage of such a solution may vary according to the nature of capability.

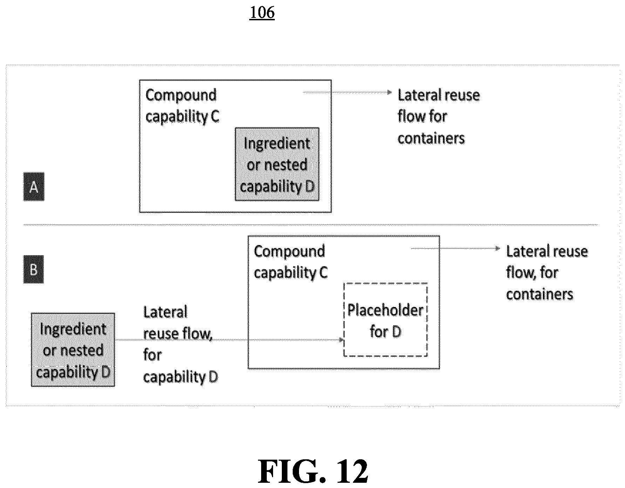

FIG. 12 shows a recursive or iterative application of translation and reuse technology 106. In the illustrated example, the top (part A) has a compound capability C, which happens to include within it one or more ingredient or nested capabilities, such as capability D. An example of a compound capability may be a shared library that has a customization for a CPU (central processing unit) and a second customization for special function hardware exercised by the customized library. As described so far, the lateral reuse principle would apply to the compound capability C taken as an indivisible unit. As shown in part B below, however, the technology described herein applies recursively (or iteratively), so that C itself might be pre-created, pooled, and laterally reused at the container level, but its ingredient capability, D, may be obtained just-in-time by intercepting creation and deinitialization flows for C.

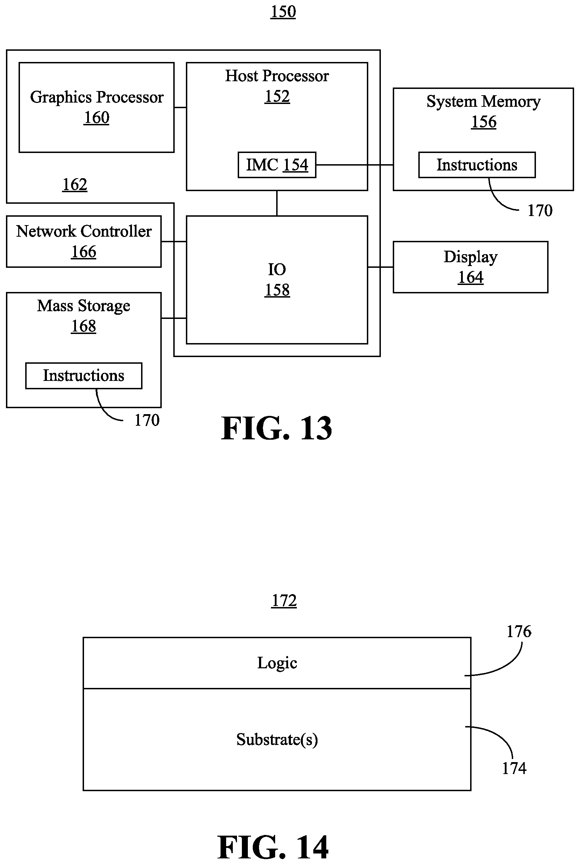

FIG. 13 shows a computing system 150 including executable program instructions 170, which when executed by one or more of a host processor 152, a graphics processor 160 or an input/output module (IO) 158, cause the computing system to perform one or more aspects of the method 70 (FIGs. 8A) and/or the method 90 (FIG. 8B), already discussed. The system 150 is considered performance-enhanced at least to the extent that containers startup faster than conventional computing systems. In an embodiment, the instructions 170 are retrieved from system memory 156 and/or mass storage 168. Additionally, the graphics processor 160, the host processor 152 and/or the IO module 158 are incorporated into a system on chip (SoC) 162, which is also coupled to a display 164 and/or a network controller 166 (wireless, wired).

FIG. 14 shows a semiconductor package apparatus 172. The illustrated apparatus 172 includes one or more substrates 174 (e.g., silicon, sapphire, gallium arsenide) and logic 176 (e.g., transistor array and other integrated circuit/IC components) coupled to the substrate(s) 174. The logic 176 may be implemented at least partly in configurable logic or fixed-functionality logic hardware. In one example, the logic 176 implements one or more aspects of the method 70 (FIGs. 8A) and/or the method 90 (FIG. 8B).

In one example, the logic 176 includes transistor channel regions that are positioned (e.g., embedded) within the substrate(s) 174. Thus, the interface between the logic 176 and the substrate(s) 174 may not be an abrupt junction. The logic 176 may also be considered to include an epitaxial layer that is grown on an initial wafer of the substrate(s) 174.

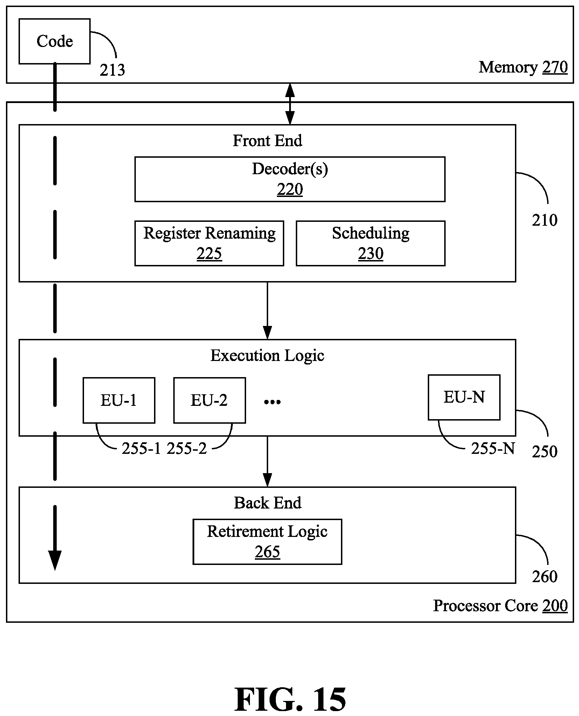

FIG. 15 illustrates a processor core 200 according to one embodiment. The processor core 200 may be the core for any type of processor, such as a micro-processor, an embedded processor, a digital signal processor (DSP), a network processor, or other device to execute code. Although only one processor core 200 is illustrated in FIG. 15, a processing element may alternatively include more than one of the processor core 200 illustrated in FIG. 15. The processor core 200 may be a single-threaded core or, for at least one embodiment, the processor core 200 may be multithreaded in that it may include more than one hardware thread context (or "logical processor") per core.

FIG. 15 also illustrates a memory 270 coupled to the processor core 200. The memory 270 may be any of a wide variety of memories (including various layers of memory hierarchy) as are known or otherwise available to those of skill in the art. The memory 270 may include one or more code 213 instruction(s) to be executed by the processor core 200, wherein the code 213 may implement one or more aspects of the method 70 (FIGs. 8A) and/or the method 90 (FIG. 8B), already discussed. The processor core 200 follows a program sequence of instructions indicated by the code 213. Each instruction may enter a front end portion 210 and be processed by one or more decoders 220. The decoder 220 may generate as its output a micro operation such as a fixed width micro operation in a predefined format, or may generate other instructions, microinstructions, or control signals which reflect the original code instruction. The illustrated front end portion 210 also includes register renaming logic 225 and scheduling logic 230, which generally allocate resources and queue the operation corresponding to the convert instruction for execution.

The processor core 200 is shown including execution logic 250 having a set of execution units 255-1 through 255-N. Some embodiments may include a number of execution units dedicated to specific functions or sets of functions. Other embodiments may include only one execution unit or one execution unit that can perform a particular function. The illustrated execution logic 250 performs the operations specified by code instructions.

After completion of execution of the operations specified by the code instructions, back end logic 260 retires the instructions of the code 213. In one embodiment, the processor core 200 allows out of order execution but requires in order retirement of instructions. Retirement logic 265 may take a variety of forms as known to those of skill in the art (e.g., re-order buffers or the like). In this manner, the processor core 200 is transformed during execution of the code 213, at least in terms of the output generated by the decoder, the hardware registers and tables utilized by the register renaming logic 225, and any registers (not shown) modified by the execution logic 250.

Although not illustrated in FIG. 15, a processing element may include other elements on chip with the processor core 200. For example, a processing element may include memory control logic along with the processor core 200. The processing element may include I/O control logic and/or may include I/O control logic integrated with memory control logic. The processing element may also include one or more caches.

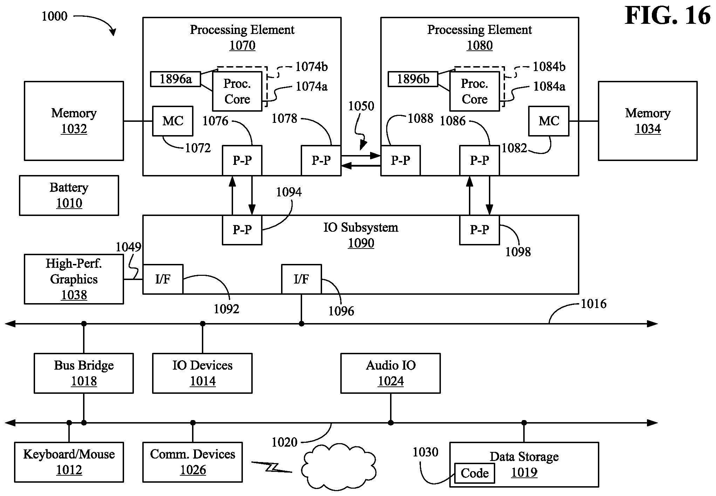

Referring now to FIG. 16, shown is a block diagram of a computing system 1000 embodiment in accordance with an embodiment. Shown in FIG. 16 is a multiprocessor system 1000 that includes a first processing element 1070 and a second processing element 1080. While two processing elements 1070 and 1080 are shown, it is to be understood that an embodiment of the system 1000 may also include only one such processing element.

The system 1000 is illustrated as a point-to-point interconnect system, wherein the first processing element 1070 and the second processing element 1080 are coupled via a point-to-point interconnect 1050. It should be understood that any or all of the interconnects illustrated in FIG. 16 may be implemented as a multi-drop bus rather than point-to-point interconnect.

As shown in FIG. 16, each of processing elements 1070 and 1080 may be multicore processors, including first and second processor cores (i.e., processor cores 1074a and 1074b and processor cores 1084a and 1084b). Such cores 1074a, 1074b, 1084a, 1084b may be configured to execute instruction code in a manner similar to that discussed above in connection with FIG. 15.

Each processing element 1070, 1080 may include at least one shared cache 1896a, 1896b. The shared cache 1896a, 1896b may store data (e.g., instructions) that are utilized by one or more components of the processor, such as the cores 1074a, 1074b and 1084a, 1084b, respectively. For example, the shared cache 1896a, 1896b may locally cache data stored in a memory 1032, 1034 for faster access by components of the processor. In one or more embodiments, the shared cache 1896a, 1896b may include one or more mid-level caches, such as level 2 (L2), level 3 (L3), level 4 (L4), or other levels of cache, a last level cache (LLC), and/or combinations thereof.

While shown with only two processing elements 1070, 1080, it is to be understood that the scope of the embodiments are not so limited. In other embodiments, one or more additional processing elements may be present in a given processor. Alternatively, one or more of processing elements 1070, 1080 may be an element other than a processor, such as an accelerator or a field programmable gate array. For example, additional processing element(s) may include additional processors(s) that are the same as a first processor 1070, additional processor(s) that are heterogeneous or asymmetric to processor a first processor 1070, accelerators (such as, e.g., graphics accelerators or digital signal processing (DSP) units), field programmable gate arrays, or any other processing element. There can be a variety of differences between the processing elements 1070, 1080 in terms of a spectrum of metrics of merit including architectural, micro architectural, thermal, power consumption characteristics, and the like. These differences may effectively manifest themselves as asymmetry and heterogeneity amongst the processing elements 1070, 1080. For at least one embodiment, the various processing elements 1070, 1080 may reside in the same die package.

The first processing element 1070 may further include memory controller logic (MC) 1072 and point-to-point (P-P) interfaces 1076 and 1078. Similarly, the second processing element 1080 may include a MC 1082 and P-P interfaces 1086 and 1088. As shown in FIG. 16, MC's 1072 and 1082 couple the processors to respective memories, namely a memory 1032 and a memory 1034, which may be portions of main memory locally attached to the respective processors. While the MC 1072 and 1082 is illustrated as integrated into the processing elements 1070, 1080, for alternative embodiments the MC logic may be discrete logic outside the processing elements 1070, 1080 rather than integrated therein.

The first processing element 1070 and the second processing element 1080 may be coupled to an I/O subsystem 1090 via P-P interconnects 1076 1086, respectively. As shown in FIG. 16, the I/O subsystem 1090 includes P-P interfaces 1094 and 1098. Furthermore, I/O subsystem 1090 includes an interface 1092 to couple I/O subsystem 1090 with a high performance graphics engine 1038. In one embodiment, bus 1049 may be used to couple the graphics engine 1038 to the I/O subsystem 1090. Alternately, a point-to-point interconnect may couple these components.

In turn, I/O subsystem 1090 may be coupled to a first bus 1016 via an interface 1096. In one embodiment, the first bus 1016 may be a Peripheral Component Interconnect (PCI) bus, or a bus such as a PCI Express bus or another third generation I/O interconnect bus, although the scope of the embodiments are not so limited.

As shown in FIG. 16, various I/O devices 1014 (e.g., biometric scanners, speakers, cameras, sensors) may be coupled to the first bus 1016, along with a bus bridge 1018 which may couple the first bus 1016 to a second bus 1020. In one embodiment, the second bus 1020 may be a low pin count (LPC) bus. Various devices may be coupled to the second bus 1020 including, for example, a keyboard/mouse 1012, communication device(s) 1026, and a data storage unit 1019 such as a disk drive or other mass storage device which may include code 1030, in one embodiment. The illustrated code 1030 may implement one or more aspects of the method 70 (FIGs. 8A) and/or the method 90 (FIG. 8B), already discussed. Further, an audio I/O 1024 may be coupled to second bus 1020 and a battery 1010 may supply power to the computing system 1000.

Note that other embodiments are contemplated. For example, instead of the point-to-point architecture of FIG. 16, a system may implement a multi-drop bus or another such communication topology. Also, the elements of FIG. 16 may alternatively be partitioned using more or fewer integrated chips than shown in FIG. 16.

### Additional Notes and Examples:

Example 1 includes a computing system comprising a network controller, a processor coupled to the network controller, and a memory coupled to the processor, the memory including a set of executable program instructions, which when executed by the processor, cause the computing system to create one or more capabilities of a software container prior to issuance of a request to create the container, wherein the one or more capabilities are associated with a computational overhead that exceeds a first threshold and a memory overhead that does not exceed a second threshold, intercept the request to create the software container after creation of the one or more capabilities, and associate the one or more capabilities with the software container.
Example 2 includes the computing system of Example 1, wherein the instructions, when executed, further cause the computing system to add the one or more capabilities to a pool of capabilities prior to issuance of the request to create the software container, and remove the one or more capabilities from the pool after association of the one or more capabilities with the software container.
Example 3 includes the computing system of Example 1, wherein the instructions, when executed, further cause the computing system to intercept a request to destroy the software container, wherein the request to create the software container and the request to destroy the software container are on-demand requests, disassociate the one or more capabilities from the software container, and add the one or more capabilities to a pool of capabilities.
Example 4 includes the computing system of Example 1, wherein the one or more capabilities are hierarchical.
Example 5 includes the computing system of Example 1, wherein the one or more capabilities include a network namespace capability, the first threshold is a computational threshold, the second threshold is a memory threshold and the request is intercepted in a Function-as-a-Service architecture.
Example 6 includes the computing system of any one of Examples 1 to 5, wherein the logic coupled to the one or more substrates is to automatically customize a translator to manage lifecycles of the one or more capabilities based on policy data.
Example 7 includes a semiconductor apparatus comprising one or more substrates, and logic coupled to the one or more substrates, wherein the logic is implemented at least partly in one or more of configurable logic or fixed-functionality hardware logic, the logic coupled to the one or more substrates to create one or more capabilities of a software container prior to issuance of a request to create the container, wherein the one or more capabilities are associated with a computational overhead that exceeds a first threshold and a memory overhead that does not exceed a second threshold, intercept the request to create the software container after creation of the one or more capabilities, and associate the one or more capabilities with the software container.
Example 8 includes the apparatus of Example 7, wherein the logic coupled to the one or more substrates is to add the one or more capabilities to a pool of capabilities prior to issuance of the request to create the software container, and remove the one or more capabilities from the pool after association of the one or more capabilities with the software container.
Example 9 includes the apparatus of Example 7, wherein the logic coupled to the one or more substrates is to intercept a request to destroy the software container, wherein the request to create the software container and the request to destroy the software container are on-demand requests, disassociate the one or more capabilities from the software container, and add the one or more capabilities to a pool of capabilities.
Example 10 includes the apparatus of Example 7, wherein the one or more capabilities are hierarchical.
Example 11 includes the apparatus of Example 7, wherein the one or more capabilities include a network namespace capability, the first threshold is a computational threshold, the second threshold is a memory threshold and the request is intercepted in a Function-as-a-Service architecture.
Example 12 includes the apparatus of any one of Examples 7 to 11, wherein the logic coupled to the one or more substrates is to automatically customize a translator to manage lifecycles of the one or more capabilities based on policy data.
Example 13 includes the apparatus of any one of Examples 7 to 11, wherein the logic coupled to the one or more substrates includes transistor channel regions that are positioned within the one or more substrates.
Example 14 includes at least one computer readable storage medium comprising a set of executable program instructions, which when executed by a computing system, cause the computing system to create one or more capabilities of a software container prior to issuance of a request to create the container, wherein the one or more capabilities are associated with a computational overhead that exceeds a first threshold and a memory overhead that does not exceed a second threshold, intercept the request to create the software container after creation of the one or more capabilities, and associate the one or more capabilities with the software container.
Example 15 includes the at least one computer readable storage medium of Example 14, wherein the instructions, when executed, further cause the computing system to add the one or more capabilities to a pool of capabilities prior to issuance of the request to create the software container, and remove the one or more capabilities from the pool after association of the one or more capabilities with the software container.
Example 16 includes the at least one computer readable storage medium of Example 14, wherein the instructions, when executed, further cause the computing system to intercept a request to destroy the software container, wherein the request to create the software container and the request to destroy the software container are on-demand requests, disassociate the one or more capabilities from the software container, and add the one or more capabilities to a pool of capabilities.
Example 17 includes the at least one computer readable storage medium of Example 14, wherein the one or more capabilities are hierarchical.
Example 18 includes the at least one computer readable storage medium of Example 14, wherein the one or more capabilities include a network namespace capability, the first threshold is a computational threshold, the second threshold is a memory threshold and the request is intercepted in a Function-as-a-Service architecture.
Example 19 includes the at least one computer readable storage medium of any one of Examples 14 to 18, wherein the instructions, when executed, further cause the computing system to automatically customize a translator to manage lifecycles of the one or more capabilities based on policy data.
Example 20 includes a method of operating a performance-enhanced computing system, the method comprising creating one or more capabilities of a software container prior to issuance of a request to create the container, wherein the one or more capabilities are associated with a computational overhead that exceeds a first threshold and a memory overhead that does not exceed a second threshold, intercepting the request to create the software container after creation of the one or more capabilities, and associating the one or more capabilities with the software container.
Example 21 includes the method of Example 20, further including adding the one or more capabilities to a pool of capabilities prior to issuance of the request to create the software container, and removing the one or more capabilities from the pool after association of the one or more capabilities with the software container.
Example 22 includes the method of Example 20, further including intercepting a request to destroy the software container, wherein the request to create the software container and the request to destroy the software container are on-demand requests, disassociating the one or more capabilities from the software container, and adding the one or more capabilities to a pool of capabilities.
Example 23 includes the method of Example 20, wherein the one or more capabilities are hierarchical.
Example 24 includes the method of Example 20, wherein the one or more capabilities include a network namespace capability, the first threshold is a computational threshold, the second threshold is a memory threshold and the request is intercepted in a Function-as-a-Service architecture.
Example 25 includes the method of any one of Examples 20 to 24, further including automatically customizing a translator to manage lifecycles of the one or more capabilities based on policy data.
Example 26 includes means for performing the method of any one of Examples 20 to 25.

The technology described herein therefore intercepts and re-scripts creation flows. The technology further enables additional methods to intercept destruction flow. The intercepting and re-scripting provides for a framework agnostic, extensible mechanism to pre-create and optionally pool capabilities that may be computationally expensive to forge on demand. The technology further manages the pre-created and/or pooled capabilities, which may vary according to the type of capability being managed. For example, security sensitive reinitialization or randomization may be performed by a capability manager. The technology may therefore be more general than passive object caching and recycling.

The modular assembly of components enables the technology to be extensible without complicating integration with popular, de-facto standardized container and runtime environments. Furthermore, the technology uses a re-scripting approach that makes it capable of being inserted into a common point across multiple cloud orchestration frameworks that use the common container and runtime environments (e.g., instead of being orchestration framework specific).

The technology also provides an "easy glide" path for new hardware exercisers (e.g., drivers, utility libraries, optimized code) to be treated as common shared libraries to be available at start time instead of having to be created, a concern that is high for latency critical event driven services such as FaaS. The pooling concept, when applicable, also amortizes overheads in addition to sidestepping creation latency.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the computing system within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of' may mean any combination of the listed terms. For example, the phrases "one or more of A, B or C" may mean A; B; C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

## Claims

1. A semiconductor apparatus comprising:
one or more substrates; and
logic coupled to the one or more substrates, wherein the logic is implemented at least partly in one or more of configurable logic or fixed-functionality hardware logic, the logic coupled to the one or more substrates to:
create one or more capabilities of a software container prior to issuance of a request to create the container, wherein the one or more capabilities are associated with a computational overhead that exceeds a first threshold and a memory overhead that does not exceed a second threshold,
intercept the request to create the software container after creation of the one or more capabilities, and
associate the one or more capabilities with the software container.

2. The apparatus of claim 1, wherein the logic coupled to the one or more substrates is to:
add the one or more capabilities to a pool of capabilities prior to issuance of the request to create the software container, and
remove the one or more capabilities from the pool after association of the one or more capabilities with the software container.

3. The apparatus of claim 1 or 2, wherein the logic coupled to the one or more substrates is to:
intercept a request to destroy the software container, wherein the request to create the software container and the request to destroy the software container are on-demand requests,
disassociate the one or more capabilities from the software container, and
add the one or more capabilities to a pool of capabilities.

4. The apparatus of one of the claims 1 to 3, wherein the one or more capabilities are hierarchical.

5. The apparatus of one of the claims 1 to 4, wherein the one or more capabilities include a network namespace capability, the first threshold is a computational threshold, the second threshold is a memory threshold and the request is intercepted in a Function-as-a-Service architecture.

6. The apparatus of any one of claims 1 to 5, wherein the logic coupled to the one or more substrates is to automatically customize a translator to manage lifecycles of the one or more capabilities based on policy data.

7. The apparatus of any one of claims 1 to 6, wherein the logic coupled to the one or more substrates includes transistor channel regions that are positioned within the one or more substrates.

8. At least one computer readable storage medium comprising a set of executable program instructions, which when executed by a computing system, cause the computing system to:
create one or more capabilities of a software container prior to issuance of a request to create the container, wherein the one or more capabilities are associated with a computational overhead that exceeds a first threshold and a memory overhead that does not exceed a second threshold;
intercept the request to create the software container after creation of the one or more capabilities; and
associate the one or more capabilities with the software container.

9. The at least one computer readable storage medium of claim 8, wherein the instructions, when executed, further cause the computing system to:
add the one or more capabilities to a pool of capabilities prior to issuance of the request to create the software container; and
remove the one or more capabilities from the pool after association of the one or more capabilities with the software container.

10. The at least one computer readable storage medium of claim 8 or 9, wherein the instructions, when executed, further cause the computing system to:
intercept a request to destroy the software container, wherein the request to create the software container and the request to destroy the software container are on-demand requests;
disassociate the one or more capabilities from the software container; and
add the one or more capabilities to a pool of capabilities.

11. The at least one computer readable storage medium of one of the claims 8 to 10, wherein the one or more capabilities are hierarchical.

12. The at least one computer readable storage medium of one of the claims 8 to 10, wherein the one or more capabilities include a network namespace capability, the first threshold is a computational threshold, the second threshold is a memory threshold and the request is intercepted in a Function-as-a-Service architecture.

13. The at least one computer readable storage medium of any one of claims 8 to 12, wherein the instructions, when executed, further cause the computing system to automatically customize a translator to manage lifecycles of the one or more capabilities based on policy data.

14. A method of operating a performance-enhanced computing system comprising:
creating one or more capabilities of a software container prior to issuance of a request to create the container, wherein the one or more capabilities are associated with a computational overhead that exceeds a first threshold and a memory overhead that does not exceed a second threshold;
intercepting the request to create the software container after creation of the one or more capabilities; and
associating the one or more capabilities with the software container.

15. The method of claim 14, further including:
adding the one or more capabilities to a pool of capabilities prior to issuance of the request to create the software container; and
removing the one or more capabilities from the pool after association of the one or more capabilities with the software container.
